# EUROPEAN PATENT APPLICATION

(11) **EP 2 080 740 A1**
(43) Date of publication of application: **22.07.2009**
(21) Application number: 08021812.6
(22) Date of filing: 16.12.2008
(51) Int. Cl.: C03C 17/00

(54) **Hydrophilic coating and method of making same**

(30) Priority: 17.12.2007 US 785; 21.12.2007 US 4510
(71) Applicant: Guardian Industries Corp., Auburn Hills, MI 48326-1714 (US)
(72) Inventor: Sharma, Pramod K., Ann Arbor Michigan 48105 (US); Veerasamy, Vijayen S., Ann Arbor Michigan 48103 (US)
(74) Representative: Hess, Peter K. G.

(57) **Abstract**

Methods of making hydrophilic coatings having anti-fog properties, and hydrophilic articles are provided. In certain example instances, a substrate supports a layer comprising titanium dioxide and a ether/oleate-based organic compound. After drying or curing, the resulting coating may be hydrophilic thereby allowing water or the like to easily shed therefrom (e.g., providing anti-fog properties).

## Description

Certain example embodiments of the present invention relate to hydrophilic and/or super hydrophilic surface coatings. In certain example embodiments of this invention, such hydrophilic coatings may be used in the context of an interior surface of a glass-based freezer door, a self-cleaning exterior tile, antifog mirror, or in any other suitable application.

### BACKGROUND AND SUMMARY OF PREFERRED EMBODIMENTS

The wettability of coatings may play a role in nature and technology. Hydrophilic coatings (e.g., coatings with a low contact angle) may be useful for self-cleaning surfaces as well as in anti-fog and/or anti-mist applications. Titania-based hydrophilic coatings may be used, although they occasionally may suffer from possible disadvantages, such as a short lifetime of the hydrophilic nature and/or activation through exposure to ultraviolet (UV) radiation.

For example, when exposed to UV radiation in the presence of water molecules on the titanium dioxide's surface, hole pairs may be produced. These hole pairs may, in turn, produce highly reactive radical species, such as an OH* free radical and Q₂⁻. These radicals may reduce and/or oxidize adsorbate impurities on the surface. For example, these radicals may decompose many organic compounds and may have particular use in antimicrobial coatings.

In addition to these radicals, the surface of titania may become highly hydrophilic with a water contact angle of near 0° under UV illumination. This phenomenon has already found application in various industrial items such as self-cleaning exterior tiles and antifogging mirrors. Titanium dioxide may be a well-suited photocatalyzer in terms of reactivity, durability, safety, absorption of UV rays, and/or scratch resistant. Of the various phases of titanium dioxide, anatase may be most effective for applications relating to photocatalytic activity, perhaps due to its electronic and geometric structure.

Sol-gel and chemical vapor deposition (CVD) methods of using titanium organometallic compounds - such as, for example, titanium tetra iso butoxide, titanium tetra isopropoxide and titanium tetra ethoxide - may be used in making titania based hydrophilic coatings. But using these organometallic precursors may be expensive and increase the overall production cost of the coating.

There may be a need, therefore, to use a colloidal titania so as to possibly reduce the cost of these titanium dioxide coatings. But the use of colloidal titania may be impacted by its wettability, just like many other coatings having industrial applications.

Coatings based on colloidal titania may generally exhibit poor wettability, especially, for example, on soda lime glass . Poor wettability may cause an uneven coverage of the colloidal titania. This uneven coverage may impact the optical quality of the resultant coating, such as, causing haze and non-uniformity. At the same time, there may be a visible rainbow in the coatings once it has been heat treated, e.g., at a temperature at or greater than 500°C.

In some instances, the colloidal particles may produce a haze in the coating. This haze may cause poor optical characteristics. The rainbow may cause poor aesthetics. Therefore, there may exist a need to improve the wettability, diminish the existence of haze, and diminish the appearance of a rainbow of a hydrophilic coating made from colloidal titania.

In some aspects and embodiments, this invention relates to a method to improve the wettability of titania-based coatings using an ether/oleate-based organic additives, such as, for example, polyoxyethylene (20) sorbitan monooleate (PSM). And in some aspects and embodiments, this invention relates to a method to produce a hydrophilic coating having a decreased amount of haze and a decreased appearance of a rainbow. For example, at least certain embodiments of the invention reported relate to a method for producing hydrophilic coatings with beneficial wetting, cosmetics (e.g., aesthetics) and optical characteristics.

In an example embodiment of this invention, there is provided a method of making a coated article including a hydrophilic coating having hydrophilic properties, the method comprising: mixing a water-based dispersion of titanium dioxide with an ether/oleate-based organic additive to form a mixture; and applying the mixture on a substrate and curing the mixture after its application so as to form a hydrophilic layer on the substrate; wherein a sessile drop of water in contact with the hydrophilic layer exhibits a contact angle of less than or equal to 25 degrees.

In a certain example embodiment, there is a coated article comprising a substrate and a hydrophilic coating, wherein the hydrophilic coating comprises a layer comprising titanium dioxide and a ether/oleate-based organic compound; and wherein a sessile drop of water in contact with the hydrophilic coating exhibits a contact angle of less than or equal to 25 degrees.

### BRIEF DESCRIPTION OF THE DRAWINGS

FIGURE 1 is a generically illustrates a substrate and fluid drop (e.g., a sessile drop of water), and contact angle θ formed between the drop and substrate.

Figure 2 generically illustrates an example embodiment of the present invention including a hydrophilic contact angle θ.

### DETAILED DESCRIPTION OF THE INVENTION

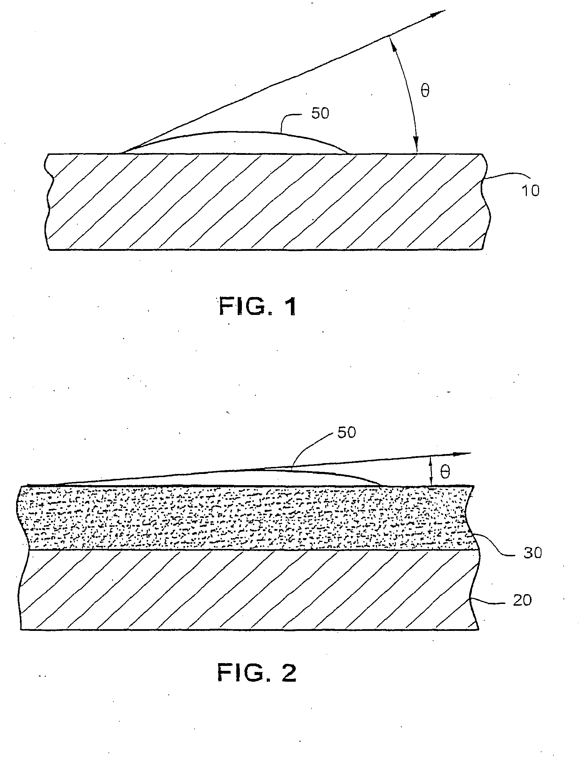

Figure 1 generically illustrates a substrate 10 (e.g., plastic or glass substrate) and fluid drop 50 (e.g.., a sessile drop of water) on the substrate 10, and contact angle θ formed between drop 50 and substrate 10. Hydrophilic performance in any of the described and claimed embodiments is a function of contact angle θ, surface energy Υ, and/or wettability or adhesion energy W. The surface energy Υ of substrate 10 may be calculated by measuring its contact angle θ.

Figure 2 generically illustrates an embodiment of the present invention. Substrate 20 supports a hydrophilic coating layer 30 that includes titanium dioxide. Substrate 20 may, for example, comprise glass (e.g., soda lime glass) and/or plastic. Substrate 20 may, for example, consist of a single material. Alternatively, substrate 20 may comprise multiple materials, preferably in layers. Although substrate 20 is depicted as directly supporting (that is, in direct contact with) hydrophilic layer 30, indirect or partial support are also contemplated. That is, layer 30 may or may not be in direct contact with substrate 20 in different embodiments of this invention (e.g., there may be other layer(s) therebetween).

In some embodiments, the substrate 20 comprises ordinary float glass, which may include additional amounts of soda (Na₂O), usually in the form of sodium carbonate or nitrate during the production process, lime (CaO) and other oxides (usually aluminum and magnesium oxides) to form a soda-lime-silica structure known colloquially as soda-lime glass. Other glass substrates can be prepared by the introduction of other additives and constituents.

Certain glasses for substrate 20 (which or may not be patterned in different instances) according to example embodiments of this invention utilize soda-lime-silica flat glass as their base composition/glass. In addition to base composition/glass, a colorant portion may be provided in order to achieve a glass that is fairly clear in color and/or has a high visible transmission. An exemplary soda-lime-silica base glass according to certain embodiments of this invention, on a weight percentage basis, includes the following basic ingredients: SiO₂, 67-75% by weight; Na₂O 10-20% by weight; CaO, 5-15% by weight; MgO, 0-7% by weight; A1₂O₃, 0-5% by weight; K₂O, 0-5% by weight; Li₂O, 0-1.5% by weight; and BaO, 0-1%, by weight.

Other minor ingredients, including various conventional refining aids, such as SO₃, carbon, and the like may also be included in the base glass. In certain embodiments, for example, glass herein may be made from batch raw materials silica sand, soda ash, dolomite, limestone, with the use of sulfate salts such as salt cake (Na₂SO₄) and/or Epsom salt (MgSO₄ x 7H₂O) and/or gypsum (e.g., about a 1:1 combination of any) as refining agents. In certain example embodiments, soda-lime-silica based glasses herein include by weight from about 10-15% Na₂O and from about 6-12% CaO, by weight.

Although described in connection with a glass substrate, certain embodiments relate to plastic or organic substrates instead of glass. In some embodiments, the substrate comprises a plastic substrate, either alone or in combination with glass. For example, the substrate may comprise at least an outer layer of polyvinyl butyral (PVB) or other suitable polymer or glass-like component.

Hydrophilic layer 30 may exhibit a contact angle θ preferably less than or equal to about 25 degrees, more preferably less than or equal to about 20 degrees, more preferably less than or equal to about 15 degrees, and even more preferably less than or equal to about 10 degrees, in certain example embodiments of this invention.

The hydrophilic layer 30 may have any suitable thickness, e.g., from about 0.2 to 5 µm.

In certain embodiments of the present invention, the hydrophilic coating layer comprises titanium dioxide and an ether/oleate-based organic additive, such as polyoxyethylene(4) lauryl ether (PLE), polyoxyethylene (20) sorbitan monooleate (PSM), and polyoxyethylene(10) isooctylphenyl ether (PPE). In certain exemplary embodiments, the additive comprises a polyoxyethylene ether of butyl alcohol; a polyoxyethylene ether of amyl alcohol; a polyoxyethylene ether of octyl alcohol; a polyoxyethylene ether of decyl alcohol; a polyoxyethylene ether of nonyl alcohol; a polyoxyethylene olyle ether; a polyoxyethylene thioether of oleyl alcohol; a polyoxyethylene dithionoleate; a monooleate of ethylene glycol; a dioleate of polyethylene glycol; a monooleate of diethylene glycol; a monooleate of a glcycerol; or a polyoxyethylene glycery oleate.

In certain embodiments, the ether/oleate-based organic additive comprises 0 to 12 wt% of the solution applied to the substrate, and all subranges therebetween, 2 to 10 wt% of the solution, and all subranges therebetween, 4 to 8 wt% of the solution, and all subranges therebetween, or 6 wt% of the solution. In other embodiments, greater and lesser amounts of the ether/oleate-based organic additive are contemplated. The ether/oleate-based organic additive may be supplied as a solid (e.g., a powdered solid) or in a solution (e.g., dissolved in a solvent or as a colloidal solution).

In certain embodiments, the hydrophilic coating layer comprises a silica from, e.g., a colloidal silica and/or a silane. Suitable silanes may include, for example, tetraethyl-ortho silane, tetra ethoxy silane, methyltrimethoxysilane, methyltriethoxysilane, ethyltrimethoxilane, propyltrimethoxysilane, isobutyltrimethoxysilane, octatryethoxysilane, phenyltriethoxysilane, tetramethoxysilane, acetoxyproplytrimethoxysilane, 3 aminopropyltrimethoxysilane, 3 cyanopropyltriethoxysilane, and 3 glycidoxypropyl trimethoxisilane.

In certain embodiments, the silica (e.g., in any form) comprises 0 to 40 wt% of the solution applied to the substrate, and all subranges therebetween, 10 to 30 wt% of the solution, and all subranges therebetween, or 15 to 25 wt% of the solution, and all subranges therebetween. In other embodiments, greater and lesser amounts of silica are contemplated. The silica may be supplied as a solid (e.g., an amorphous or crystalline silica) or in a solution (e.g., dissolved in a solvent or as a colloidal silica solution).

In certain embodiments, the titanium dioxide may comprise 0.1 to 5 wt% of the solution applied to the substrate, and all subranges therebetween, or about 0.5 wt% of the solution applied to the substrate. In other embodiments, greater and lesser amounts of titanium dioxide are contemplated.

Hydrophilic layer 30 may be applied as a liquid, then permitted to dry and/or cure. The drying and/or curing may occur, for example, in the ambient atmosphere or in a temperature- and/or pressure-controlled atmosphere, such as in an oven or vacuum oven. For example, in certain embodiments, the coating may be cured at a temperature ranging from 150°C to 350°C, more preferably at around 250°C, for a sufficient period of time, e.g., between 1 and 30 minutes, more preferably about 10 minutes. The coating may, though not necessarily, be heat treated at a higher temperature for a brief period of time. The heat treatment may occur at a temperature ranging from 300°C to 800°C, more preferably at around 500°C, for a sufficient period of time, e.g., between 0.1 and 10 minutes, more preferably about 3.5 minutes.

In addition, the composition of the atmosphere's gas may be controlled during drying/curing; that is, the drying may occur, for example, in an inert atmosphere of nitrogen or argon or in an atmosphere filled entirely with oxygen, carbon dioxide, or other gas. Furthermore, partial drying (or evaporation) is contemplated and included within the terms "drying" and "curing" and their variants.

To measure contact angle in one embodiment, a sessile drop 50 of a liquid such as water is placed on the substrate as shown in Figure 1. A contact angle θ between the drop 50 and underlying article comprising the substrate 20 and the supported layers appears, defining an angle θ depending upon the interface tension between the three phases at the point of contact. Though not drawn to scale, the contact angle depicted in Figure 1 is greater than the contact angle depicted in Figure 2, because the article in Figure 2 is hydrophilic (i.e., results in a smaller contact angle).

Several examples were prepared, so as to illustrate exemplary embodiments of the present invention.

Although the examples describe the use of the flow-coating method, the uncured coating may be deposited in any suitable manner, including, for example, spin-coating method, roller-coating, spray-coating, and any other method of depositing the uncured coating on a substrate.

Similarly, although the examples describe the use of glass, any suitable substrate may be used in certain embodiments of the present invention.

Example Nos. 1 to 5 relate to the use of polyoxyethylene (20) sorbitan monooleate (PSM) to improve wetting properties of the coatings.

### Example #1

In this example, 0.5 wt% water based titania dispersion (commercially available from TioxoClean Inc.) was used to coat on the glass substrate by flow coating method. The coating was cured at 250°C for 10 minutes, then heat treated at 500°C for 3.5 minutes. Due to the poor wettability, the coating did not spread well on the glass substrate. The surface tension of this dispersion is very high which leads to high cohesion force of the water to the titania particles.

The wettability was measured on the scale of 1 to 5 and shown in the Table 1. On scale, 1 refers to the best wetting properties of coating and 5 refers to the poorest wettability of the coating. The wetting scale of the coating using only this dispersion is 5 as shown in the Table 1. In determining wettability, the following steps were used: spread the liquid coating on substrate; place the coated substrate on a flat surface for 1 minute; and determine if the whole surface of area of the substrate is coated by liquid. A number from 1 to 5 is designated to reflect how much of the surface is wet (e.g., how much of the surface is not wetted).

### Example #2

In this example, 0.5 wt% water based titania dispersion (commercially available from TioxoClean Inc.) was mixed with 2 wt% of polyoxyethylene (20) sorbitan monooleate (PSM) (commercially available from Fisher) and stirred for 1 hour. The weight percentages are expressed as a percentage of the total weight of the solution, including the titania and PSM. This solution was applied on the glass substrate by flow coating method. The coating was cured at 250°C for 10 minutes, then heat treated at 500°C for 3.5 minutes. The surface tension of this dispersion is reduced by PSM and wetting property of the coating improved to some extent. The wetting scale of the coating using only this dispersion is 3 as shown in the Table 1.

### Example #3

Example #3 was similar to Example #2 except that the amount of PSM was replaced with 6 wt%. The wetting scale of the coating using only this dispersion is 2 as shown in the Table 1.

### Example #4

Example #4 was similar to Example #2 except that the amount of PSM was replaced with 7 wt%. The wetting scale of the coating using only this dispersion is 2 as shown in the Table 1.

### Example #5

Example #5 was similar to Example #2 except that the amount of PSM was replaced with 10.58 wt%. The wetting scale of the coating using only this dispersion is 2 as shown in the Table 1.

**Table 1: Effect of PSM on wetting of coating at the scale of 1 (best) to 5 (poorest)**

| | Titania Solid (wt%) | PSM (wt%) | Wetting |
|---|---|---|---|
| Example #1 | 0.5 | 0 | 5 |
| Example #2 | 0.5 | 2 | 3 |
| Example #3 | 0.5 | 6 | 2 |
| Example #4 | 0.5 | 7 | 2 |
| Example #5 | 0.5 | 10.58 | 2 |

Example Nos. 6 to 9 indicates the use of silica to reduces the haze and rainbow/color in the coatings. The appearance or presence of a rainbow was determined using an ordinary lamp.

### Example #6

In this example, 0.5 wt% water based titania dispersion (commercially available from TioxoClean Inc.) was mixed with 6 wt% of polyoxyethylene (20) sorbitan monooleate (PSM) and 2.5 wt% of silica using tetraethyl-ortho silanes (supplied by Aldrich in a ethanol-based system) as a precursor. This mixture was stirred for 1 hour. The coating was cured at 250°C for 10 minutes, then heat treated at 500°C for 3.5 minutes. The weight percentages are expressed as a percentage of the total weight of the solution, including the titania, PSM, and silanes. The rainbow effect was measured visually and shown in the Table 2. The coating shows a rainbow after heat treatment at 500°C as shown in the Table 2. The haze of the coating was 5.1% which was measured by Gadner haze meter.

### Example #7

Example #7 was similar to Example #6 except that the amount of silica was replaced with 5 wt%. A rainbow was seen in the coatings as shown in the Table 2. The haze of the coating was 2.6%.

### Example #8

Example #8 was similar to Example #6 except that the amount of silica was replaced with 10 wt%. No rainbow was seen in the coatings as shown in the Table 2. The haze of the coating was 1.67%.

### Example #9

Example #9 was similar to Example #6 except that the amount of silica was replaced with 20 wt%. No rainbow was seen in the coatings as shown in the Table 2. The haze of the coating was 1.43%.

**Table 2: Effect of silica on the haze and rainbow of coatings**

| | Titania Solid (wt%) | PSM (wt%) | Silica (wt%) | Haze (%) | Rainbow |
|---|---|---|---|---|---|
| Example #6 | 0.5 | 6 | 2.5 | 5.2 | Yes |
| Example #7 | 0.5 | 6 | 5 | 2.6 | Yes |
| Example #8 | 0.5 | 6 | 10 | 1.67 | No |
| Example #9 | 0.5 | 6 | 20 | 1.43 | No |

Example Nos. 10 to 13 indicate the formation of a titania coating using PSM and silica with improved wetting properties and free from rainbow effects.

### Example #10

In this example, 0.1 wt% water based titania dispersion (commercially available from TioxoClean Inc.) was mixed with 6 wt% of polyoxyethylene (20) sorbitan monooleate (PSM) and 10 wt% of silica using tetraethyl-ortho silanes (supplied by Aldrich) as a precursor. This mixture was stirred for 1 hour. The coating was cured at 250°C for 10 minutes, then heat treated at 500°C for 3.5 minutes. The coating has good wetting property. The contact angle was 18.14° as shown in Table 3. The contact angle was measured by using FTÅ 135 Contact Angle/Surface Energy Analyzer supplied by First Ten Angstroms Inc..

### Example #11

Example #11 was similar to Example #10 except that the amount of titania colloid was replaced with 1 wt%. The contact angle was 14.14° as shown in Table 3 and measured by using FTÅ 135 Contact Angle/Surface Energy Analyzer.

### Example #12

Example #12 was similar to Example #10 except that the amount of titania colloid was replaced with 2 wt%. The contact angle was 9.13° as shown in Table 3 and measured by using measured by using FTÅ 135 Contact Angle/Surface Energy Analyzer.

### Example #13

The example #13 was similar to example #10 except that the amount of titania colloid was replaced with 2 wt%. The contact angle was 8.97° as shown in Table 3 and measured by using measured by using FTÅ 135 Contact Angle/Surface Energy Analyzer.

**Table 3: Contact angle with varying concentration of titania colloids**

| | Titania Solid (%wt) | PSM (%wt) | Silica (owt), | Contact Angle |
|---|---|---|---|---|
| Example #10 | 0.1 | 6 | 10 | 18.14 |
| Example #11 | 1 | 6 | 10 | 14.14 |
| Example #12 | 2 | 6 | 10 | 9.13 |
| Example #13 | 4 | 6 | 10 | 8.97 |

In accordance with exemplary embodiments, it may be possible to achieve good wetting properties by using PSM in a concentration of 2 wt% or higher.

In accordance with certain embodiments, the haze in the coating can be reduced from 5.1 to 1.4 by using silica particles, possibly due to its glassy behaviour.

In accordance with certain embodiments, a rainbow may be minimized by using silica particles, possibly to reflect the light due to varying thickness.

And in accordance with certain embodiments, a hydrophilic coating may be made with a contact angle of 18.14° or less.

As described and claimed herein, all numerical values and ranges of numerical values are approximate and thus include a reasonable or insignificant amount of deviation from the stated numerical values.

While the invention has been described :in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of making a coated article including a hydrophilic coating having hydrophilic properties, the method comprising:
mixing a water-based dispersion including titanium oxide with an ether/oleate-based organic additive to form a mixture; and
applying the mixture directly or indirectly on a substrate and curing the mixture after its application so as to form a hydrophilic layer on the substrate;
wherein a sessile drop of water in contact with the hydrophilic layer exhibits a contact angle of less than or equal to 25 degrees.

2. The method of claim 1, wherein the ether/oleate-based organic additive comprises polyoxyethylene (20) sorbitan monooleate.

3. The method of claim 1, wherein the step of mixing the water-based dispersion comprising titanium oxide, such as titanium dioxide, with the ether/oleate-based organic additive further includes mixing a silica.

4. The method of claim 3, wherein the silica comprises a tetraethyl-ortho silane.

5. The method of claim 1, wherein the contact angle of less than or equal to 20 degrees.

6. The method of claim 1, wherein the contact angle is less than or equal to 15 degrees.

7. The method of claim 1, wherein the contact angle is less than or equal to 10 degrees.

8. The method of claim 1, wherein the substrate comprises a glass substrate.

9. The method of claim 1, wherein the substrate comprises a plastic substrate.

10. A coated article comprising a substrate and a hydrophilic coating, wherein the hydrophilic coating comprises a layer comprising titanium dioxide and a ether/oleate-based organic compound; and wherein a sessile drop of water in contact with the hydrophilic coating exhibits a contact angle of less than or equal to 25 degrees.

11. The coated article of claim 10, wherein the substrate comprises soda lime glass.

12. The coated article of claim 10, wherein the contact angle is less than or equal to 15 degrees.

13. The coated article of claim 10, wherein the layer further comprises silica.
